# FASCICULE DE BREVET EUROPEEN

(11) **EP 4 204 701 B1**
(45) Date de publication et mention de la délivrance du brevet: **01.05.2024**
(21) Numéro de dépôt: 21840646.0
(22) Date de dépôt: 30.12.2021
(51) Int. Cl.: F16C 19/18, F16C 33/78

(54) **ROULEMENT DE ROUE EQUIPÉ D'UN DISPOSITIF D'ÉTANCHÉITÉ À GOUTTIÈRE ET CHICANE**
RADLAGER, DAS MIT EINER DICHTUNGSVORRICHTUNG MIT RINNE UND SCHIKANE AUSGESTATTET IST
WHEEL BEARING EQUIPPED WITH A SEALING DEVICE WITH GUTTER AND CHICANE

(30) Priorité: 29.01.2021 FR 2100909
(43) Date de publication de la demande: 05.07.2023
(73) Titulaire: NTN Europe, 74000 Annecy (FR)
(72) Inventeur: BAUDU, Alexandre, 74010 Annecy Cedex (FR); POURROY-SOLARI, Vincent, 74230 Thônes (FR); RUHLAND, Siegfried, 74010 Annecy Cedex (FR)
(74) Mandataire: Alatis
(86) Numéro de dépôt international: PCT/EP2021/087877
(87) Numéro de publication internationale: WO 2022/161735

(56) Documents cités:
- EP-A1- 2 821 662
- DE-A1-102009 023 041

## Description

### DOMAINE TECHNIQUE DE L'INVENTION

L'invention se rapporte à un roulement de roue, notamment un roulement de roue de véhicule automobile, et en particulier, bien que de manière non exclusive, à un roulement de roue motrice.

### ETAT DE LA TECHNIQUE ANTERIEURE

Les motorisations électriques ou hybrides de certains véhicules automobiles réduisent l'espace disponible pour positionner le bol de transmission des roues motrices, et conduisent à proposer des assemblages dans lesquels une partie au moins du guidage en rotation des roues est en recouvrement avec le bol de transmission, du type décrit par exemple dans la demande française FR2000720, non publiée à ce jour. De tels assemblages nécessitent des roulements de roue de diamètre plus important que les roulements de roue habituellement rencontrés. Pour garantir l'étanchéité de tels roulements, il est nécessaire de prévoir des joints d'étanchéité. À cet effet, on peut naturellement penser à un joint cassette, logé dans un espace situé radialement directement entre la bague intérieure et la bague extérieure. Toutefois, un tel joint d'étanchéité de grand diamètre pose des problèmes qu'il est difficile de résoudre sans faire augmenter le prix de revient de la fonction. En particulier, le joint engendre des frottements entre lèvre de joint et siège, et ces frottements augmentent avec le diamètre, ce qui se répercute négativement sur le couple résistant et sur la température de fonctionnement. Par ailleurs, un joint de grand diamètre exige une précision de montage supplémentaire et des tolérances de fabrication réduites. Enfin, l'insertion d'un joint cassette dans le roulement de roue nécessite deux portées cylindriques en regard l'une de l'autre sur la bague extérieure et la bague intérieure.

Dans le document DE102009023041 est décrit un roulement de roue comportant une bague extérieure et au moins une bague intérieure, guidées l'une par rapport à l'autre autour d'un axe de révolution du roulement de roue, le roulement de roue comportant en outre un dispositif d'étanchéité, le dispositif d'étanchéité comportant au moins une structure extérieure rapportée sur la bague extérieure et une structure intérieure rapportée sur la bague intérieure, la structure extérieure et la structure intérieure délimitant ensemble un passage en chicane présentant une entrée. La structure extérieure présente une portion de frettage frettée sur la bague extérieure, et forme une gouttière annulaire ouverte radialement vers l'extérieur. L'entrée du passage en chicane et la portion de frettage de la structure extérieure sont situées axialement de part et d'autre de la gouttière, le passage en chicane et la gouttière étant situés d'un même premier côté d'un plan de référence de la bague extérieure, perpendiculaire à l'axe de révolution et tangent à une paroi d'extrémité de la bague extérieure. La portion de frettage de la structure extérieure et la bague extérieure étant situées d'un deuxième côté du plan de référence de la bague extérieure, opposé au premier côté. La gouttière présente une paroi latérale entièrement en appui contre la face transversale d'extrémité de la bague extérieure, et la profondeur de la gouttière est limitée par la présence de la structure intérieure. La structure intérieure supporte par ailleurs un codeur qui peut être lu radialement à travers le fond de la gouttière par un capteur positionné dans la gouttière.

### EXPOSE DE L'INVENTION

L'invention vise à remédier aux inconvénients de l'état de la technique et à proposer un roulement de roue qui concilie un grand diamètre primitif et une fonction d'étanchéité satisfaisante d'un point des performances techniques et du prix de revient.

Pour ce faire est proposé, selon un premier aspect de l'invention, un roulement de roue comportant au moins une bague extérieure et au moins une bague intérieure, guidées l'une par rapport à l'autre autour d'un axe de révolution du roulement de roue, le roulement de roue comportant en outre un dispositif d'étanchéité, le dispositif d'étanchéité comportant au moins une structure extérieure rapportée sur la bague extérieure et une structure intérieure rapportée sur la bague intérieure, la structure extérieure et la structure intérieure délimitant ensemble un passage en chicane présentant une entrée, la structure extérieure présentant une portion de frettage frettée sur la bague extérieure, la structure intérieure (78) présentant une portion de frettage frettée sur une portée de frettage de la bague intérieure. La structure extérieure forme une gouttière annulaire ouverte radialement vers l'extérieur, l'entrée du passage en chicane et la portion de frettage de la structure extérieure étant situées axialement de part et d'autre de la gouttière, le passage en chicane et la gouttière étant situés d'un même premier côté d'un plan de référence de la bague extérieure, perpendiculaire à l'axe de révolution et tangent à une paroi d'extrémité de la bague extérieure, la portion de frettage de la structure extérieure et la bague extérieure étant situées d'un deuxième côté du plan de référence de la bague extérieure, opposé au premier côté. La gouttière présente un fond et des parois latérales situées axialement de part et d'autre du fond, les parois latérales étant plus éloignées de l'axe de révolution que le fond.

Ainsi, le positionnement de la portion fonctionnelle de la structure extérieure du dispositif d'étanchéité axialement à l'extérieur du plan de référence permet d'intégrer au dispositif d'étanchéité une gouttière et un passage en chicane, qui confèrent ensemble une excellente protection du roulement contre les aspersions. La gouttière permet en effet d'évacuer le liquide en minimisant l'exposition de l'entrée du passage en chicane. Le positionnement de l'entrée du passage en chicane du côté de la gouttière opposé à la portion de frettage est en outre particulièrement avantageux lorsque l'espace disponible entre la bague extérieure et la bague intérieure est réduit, par exemple lorsque le chemin de roulement de la bague intérieure est proche du plan de référence de la bague extérieure.

La structure intérieure comporte une collerette annulaire plane faisant saillie radialement depuis la portion de frettage de la structure intérieure vers la bague extérieure, positionnée en regard et à faible distance d'une des parois latérales de la gouttière. Une telle collerette permet de confiner la graisse à l'intérieur du volume défini entre la bague extérieure et ma bague intérieure, permettant le cas échéant d'éliminer une lèvre de joint (ou de réduire sa pression de contact) en contribuant ainsi à une diminution du couple de frottement. Elle peut également, le cas échéant, constituer un support pour un codeur qui se trouve alors positionné pour être lu par un capteur logé partiellement dans la gouttière.

Suivant un deuxième aspect de l'invention, celle-ci a trait à un palier lisse ou à roulement comportant au moins une bague intérieure et au moins une bague extérieure, la bague intérieure et la bague extérieure étant aptes à tourner l'une par rapport à l'autre autour d'un axe de révolution du palier.

La bague intérieure présente :
- au moins un chemin de guidage annulaire,
- une face d'extrémité axiale tournée dans une direction axiale de référence parallèle à l'axe de révolution, la face d'extrémité axiale de la bague intérieure étant tangente à un plan de référence de la bague intérieure, perpendiculaire à l'axe de révolution et situé axialement à distance du chemin de guidage de la bague intérieure dans la direction de référence,
- une portée de frettage s'étendant axialement entre la face d'extrémité axiale de la bague intérieure et le chemin de guidage de la bague intérieure.

La bague extérieure présente :
- au moins un chemin de guidage annulaire situé en regard du chemin de guidage de la bague intérieure,
- une face d'extrémité axiale tournée dans la direction axiale de référence, la face d'extrémité axiale de la bague extérieure étant tangente à un plan de référence de la bague extérieure, perpendiculaire à l'axe de révolution et situé axialement à distance du chemin de guidage de la bague extérieure dans la direction de référence,
- une portée de frettage s'étendant axialement entre la face d'extrémité axiale de la bague extérieure et le chemin de guidage de la bague extérieure.

Le palier comporte en outre un dispositif d'étanchéité, le dispositif d'étanchéité comportant au moins :
- une structure extérieure solidaire de la bague extérieure, la structure extérieure comportant au moins une portion de frettage frettée sur la portée de frettage de la bague extérieure et au moins une portion fonctionnelle située d'un côté du plan de référence de la bague extérieure opposé à la portion de frettage de la structure extérieure, et
- une structure intérieure solidaire de la bague intérieure, la structure intérieure comportant au moins une portion de frettage frettée sur la portée de frettage de la bague intérieure et au moins une portion fonctionnelle située d'un côté du plan de référence de la bague intérieure opposé à la portion de frettage de la structure intérieure.

Selon ce deuxième aspect de l'invention, la portion fonctionnelle de la structure extérieure solidaire de la bague extérieure forme une gouttière ouverte radialement vers l'extérieur, une partie au moins de la gouttière étant en recouvrement axial avec une partie au moins de la portée de frettage de la bague intérieure. En positionnant une gouttière au moins partiellement dans l'espace situé entre le plan de référence de la bague intérieure et le plan de référence de la bague extérieure, on évite que la gouttière ne vienne impacter négativement l'encombrement axial du palier.

La structure extérieure et la structure intérieure peuvent de préférence délimiter ensemble un passage en chicane présentant une entrée, l'entrée du passage en chicane et la portion de frettage de la structure extérieure étant de préférence situées axialement de part et d'autre de la gouttière, le passage en chicane et la gouttière étant situés de préférence d'un même premier côté du plan de référence de la bague extérieure, la portion de frettage de la structure extérieure et la bague extérieure étant de préférence située d'un deuxième côté du plan de référence de la bague extérieure, opposé au premier côté.

Le cas échéant, et de manière similaire au premier aspect de l'invention, la structure intérieure peut comporter une collerette annulaire plane faisant saillie radialement depuis la portion de frettage de la structure intérieure vers la bague extérieure, positionnée en regard et à faible distance d'une des parois latérales de la gouttière. Une telle collerette permet de confiner la graisse à l'intérieur du volume défini entre la bague extérieure et ma bague intérieure, permettant le cas échéant d'éliminer une lèvre de joint (ou de réduire sa pression de contact) en contribuant ainsi à une diminution du couple de frottement. Elle peut également, le cas échéant, constituer un support pour un codeur qui se trouve alors positionné pour être lu par un capteur logé partiellement dans la gouttière.

Le palier selon ce deuxième aspect de l'invention peut être un palier à roulement, et constituer notamment un roulement de roue. L'invention a également trait à un dispositif de support de roue de véhicule automobile, comportant un palier selon le deuxième aspect de l'invention, la bague intérieure étant une bague tournante, de préférence un moyeu de roue ou une bague solidaire d'un moyeu de roue et la bague extérieure est une bague fixe présentant une interface de fixation à un support de roue, notamment un pivot de roue.

Naturellement, divers modes de réalisation, discutés ci-après, peuvent être envisagés, qui s'appliquent aussi bien roulement de roue selon le premier aspect de l'invention que, le cas échéant, au palier lisse ou à roulement selon le deuxième aspect de l'invention.

Suivant un mode de réalisation, le passage en chicane est délimité par une paroi de chicane de la structure extérieure et une paroi de chicane de la structure intérieure. De préférence, la paroi de chicane de la structure extérieure est située axialement entre le plan de référence de la bague extérieure et la paroi de chicane de la structure intérieure.

Suivant un mode de réalisation, la gouttière est située axialement entre la portion de frettage de la structure extérieure et la paroi de chicane de la structure intérieure. L'espace entouré par la gouttière et situé entre la gouttière et l'axe de révolution n'est pas occupé par la paroi de chicane de la structure extérieure et est libre pour accueillir d'autres composant du roulement de roue, par exemple une partie de la bague intérieure, et notamment une portée de frettage de la bague intérieure sur laquelle est frettée une portion de frettage de la structure intérieure.

Suivant un mode de réalisation, la paroi de chicane de la structure extérieure forme une ou plusieurs gouttières additionnelles, situées à l'intérieur du passage en chicane. Dans l'hypothèse où la bague extérieure est fixe, les gouttières permettent de limiter la pénétration des polluants dans le passage en chicane, et de guider par gravité vers l'entrée du passage en chicane les polluants qui auraient pu malgré tout y pénétrer.

Suivant un mode de réalisation, la paroi de chicane de la structure intérieure forme une ou plusieurs parois tronconiques tournées vers l'axe de révolution et convergeant chacune vers un sommet plus éloigné du plan de référence que l'entrée. Lorsque la bague intérieure est une bague tournante destinée à tourner avec le moyeu de roue, une telle disposition permet d'évacuer par centrifugation les polluants qui auraient pénétré à l'intérieur du passage en chicane, en les guidant vers l'entrée du passage en chicane. Idéalement, les gouttières de la paroi de chicane de la structure extérieure sont combinées avec les parois tronconiques de la paroi de chicane intérieure, pour un effet optimal d'évacuation des polluants.

Suivant un mode de réalisation, la paroi de chicane de la structure extérieure forme une ou plusieurs nervures annulaires de la structure extérieure, la paroi de chicane de la structure intérieure formant une ou plusieurs nervures annulaires de la structure intérieure, qui viennent s'interposer dans des espaces intercalaires entre les nervures annulaires de la structure extérieure.

Suivant un mode de réalisation, la portion d'entrée de la paroi de chicane de la structure intérieure est cylindrique, ou tronconique, convergeant vers un sommet plus éloigné du plan de référence que l'entrée. Suivant un mode de réalisation, la portion d'entrée de la paroi de chicane de la structure extérieure est cylindrique, ou tronconique, convergeant vers un sommet plus éloigné du plan de référence que l'entrée ;

Suivant un mode de réalisation, l'entrée du passage en chicane est tournée axialement vers la gouttière, et plus généralement vers la bague extérieure, qui fait écran contre les projections.

Le fond de la gouttière est de préférence plus proche de l'axe de révolution que l'entrée du passage en chicane. L'entrée du passage en chicane débouche de préférence sur un pourtour radial extérieur d'une des parois latérales de la gouttière.

Suivant un mode de réalisation, la bague extérieure forme au moins un chemin de roulement, la bague intérieure formant au moins un chemin de roulement situé en regard du chemin de roulement de la bague extérieure et délimitant avec le chemin de roulement de la bague extérieure un volume intérieur du roulement de roue ouvert sur un volume d'étanchéité délimité par la structure extérieure du dispositif d'étanchéité et par la structure intérieure du dispositif d'étanchéité, le roulement de roue comportant au moins une rangée de corps roulants aptes à rouler sur le chemin de roulement de la bague extérieure et le chemin de roulement de la bague intérieure de manière à permettre un mouvement relatif de rotation entre la bague intérieure et la bague extérieure autour d'un axe de révolution. L'entrée du passage en chicane est plus éloignée de l'axe de révolution qu'un cercle primitif défini par la rangée de corps roulants.

Suivant un mode de réalisation, le dispositif d'étanchéité comporte en outre une lèvre de joint élastiquement déformable. La lèvre de joint est de préférence fixée à une première des structures intérieure ou extérieure et vient en contact glissant contre un siège de joint formé sur une deuxième des structures intérieure ou extérieure. La lèvre de joint et le siège de joint sont de préférence situés dans le volume d'étanchéité.

Suivant un mode de réalisation particulièrement avantageux, une ou plusieurs des conditions suivantes sont réalisées :
- le siège de joint est plus proche de l'axe de révolution que l'entrée du passage en chicane ;
- le siège de joint est plus proche de l'axe de révolution que le cercle primitif défini par la rangée de corps roulants ;
- le siège de joint est plus proche de l'axe de révolution qu'un fond de chemin du chemin de roulement de la bague intérieure ;
- le siège de joint est plus proche de l'axe de révolution qu'une portion de frettage de la structure intérieure, frettée sur une portée de frettage de la bague intérieure.

On limite ainsi la circonférence du siège de joint, donc le couple de frottement entre la lèvre de joint et le siège de joint.

De préférence, la lèvre de joint est située du premier côté du plan de référence de la bague extérieure.

Suivant un mode de réalisation, la portion de frettage de la structure extérieure est frettée sur une portée de frettage de la bague extérieure qui est tournée radialement vers l'intérieur et au moins partiellement située axialement entre le chemin de roulement de la bague extérieure et le plan de référence. Alternativement, on peut également envisager que la portée de frettage de la bague extérieure soit tournée radialement vers l'extérieure.

Suivant un mode de réalisation, la portée de frettage de la bague extérieure est plus éloignée de l'axe de révolution que le cercle primitif de la rangée de corps roulants, et optionnellement plus éloignée de l'axe de révolution qu'un fond de chemin du chemin de roulement de la bague extérieure.

Suivant un mode de réalisation, la structure extérieure comporte une armature rigide, par exemple en métal, notamment en tôle, ou en matière plastique, formant la portion de frettage. On peut alors prévoir que l'armature forme la gouttière. On peut également prévoir que l'armature forme la paroi de chicane de la structure extérieure.

Suivant un mode de réalisation, la bague intérieure présente une face d'extrémité axiale tournée dans la direction axiale de référence. La face d'extrémité axiale de la bague intérieure peut être en saillie par rapport à la face d'extrémité axiale de la bague extérieure dans la direction axiale de référence. Suivant un mode de réalisation, la gouttière est située axialement de part et d'autre d'un plan de référence de la bague intérieure, perpendiculaire à l'axe de révolution et tangent à la face d'extrémité axiale de la bague intérieure.

De préférence, un ou plusieurs des dispositions suivantes sont réalisées :
- la bague extérieure présente une interface de fixation à une jambe de suspension,
- la bague intérieure constitue un moyeu de roue ou est pourvue d'une interface de fixation à un moyeu de roue,
- la bague intérieure comporte une interface d'appui, de fixation ou de frettage sur un bol de transmission,
- la portion de frettage est cylindrique,
- la bague extérieure est monobloc, et/ou
- la bague extérieure comporte un chemin de roulement additionnel positionné en regard et à distance d'un chemin de roulement additionnel formé sur la bague intérieure ou sur un moyeu de roue solidaire de la bague intérieure.

### BREVE DESCRIPTION DES FIGURES

D'autres caractéristiques et avantages de l'invention ressortiront à la lecture de la description qui suit, en référence aux figures annexées, qui illustrent :
- figure 1 : une vue en coupe axiale d'un ensemble de support de roue comportant un roulement de roue suivant un premier mode de réalisation de l'invention ;
- figure 2 : une vue de détail de certains composants du roulement de roue de la figure 1 ;
- figure 3 : une vue de détail de certains composants d'un roulement de roue suivant un deuxième mode de réalisation de l'invention ;
- figure 4 : une vue de détail de certains composants d'un roulement de roue suivant un troisième mode de réalisation de l'invention.

Pour plus de clarté, les éléments identiques ou similaires sont repérés par des signes de référence identiques sur l'ensemble des figures.

### DESCRIPTION DETAILLEE DE MODES DE REALISATION

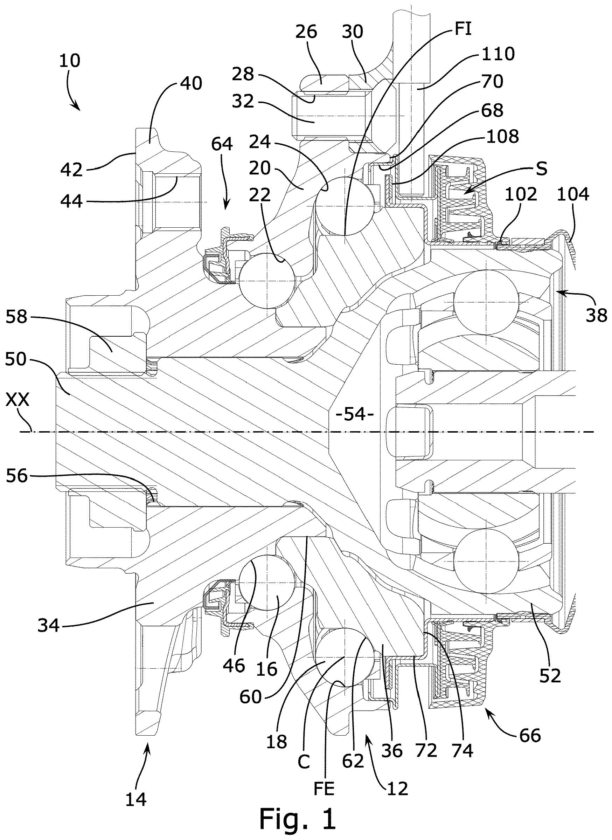

Sur la figure 1 est illustré un palier à roulement constituant un assemblage de roue motrice de véhicule automobile **10,** comportant un sous-ensemble fixe 12, destiné à être solidarisé à un organe de suspension d'un véhicule automobile (non représenté) et définissant un axe de révolution **XX,** un sous-ensemble tournant **14,** apte à tourner autour de l'axe de révolution **XX** à l'intérieur du sous-ensemble fixe **12,** et des corps roulants de guidage **16, 18** entre le sous-ensemble tournant **14** et le sous-ensemble fixe **12.**

Le sous-ensemble fixe **12** est ici constitué par une bague extérieure métallique massive monobloc **20** sur laquelle sont formés dans ce mode de réalisation deux chemins de roulement extérieurs **22, 24** coaxiaux définissant l'axe de révolution **XX,** l'un des chemins de roulement extérieurs **22** étant destiné à être positionné d'un côté extérieur du véhicule, et l'autre **24** étant destiné à être positionné d'un côté intérieur du véhicule, c'est-à-dire plus proche d'un plan vertical longitudinal médian du véhicule. La bague extérieure comporte en outre au moins une bride de fixation **26** s'étendant radialement vers l'extérieur, dans laquelle sont formés des alésages **28** pour la fixation de la bride de fixation **26** à un organe de suspension **30,** en l'occurrence un pivot de jambe de suspension, par l'intermédiaire d'éléments de fixation **32.**

Le sous-ensemble tournant **14** comporte un moyeu de roue **34** qui forme une bague intérieure de roulement du côté extérieur du véhicule, une deuxième bague intérieure de roulement **36** située du côté intérieur du véhicule et un bol de transmission **38.**

Le moyeu de roue **34** est une pièce métallique massive monobloc, qui comporte un flasque **40** de fixation d'une jante de roue motrice et/ou d'un disque de frein. Le flasque **40** présente une face plane **42** d'appui pour le disque de frein ou la jante de roue, et est pourvu d'alésages de fixation **44,** permettant l'insertion d'éléments de fixation de la jante et/ou du disque de frein. Sur le moyeu de roue **34** est formé un premier chemin de roulement intérieur **46** en regard du premier chemin de roulement extérieur **22.**

Le bol de transmission **38** est une pièce métallique massive monobloc qui, dans ce mode de réalisation, présente une portion saillante d'extrémité **50** pleine et une portion médiane évasée **52** délimitant une cavité **54** de joint homocinétique. La portion saillante **50** du bol de transmission **38** est cannelée et montée libre, ajustée ou frettée dans une cavité tubulaire cannelée **56** du moyeu de roue **34,** formant une interface de contact cannelée. Par ailleurs, on a illustré avec sur la figure 1 des moyens de fixation du bol de transmission **38** et du moyeu de roue **34,** qui mettent en oeuvre un écrou **58** vissé à une extrémité filetée de la portion saillante **50,** et en appui contre un épaulement du moyeu de roue **34.** La bague intérieure de roulement **36** du côté intérieur du véhicule est frettée sur une portée de frettage cylindrique **60** du moyeu de roue **34** et pincée en direction axiale entre le moyeu de roue **34** et le bol de transmission **38.**

Un chemin de roulement intérieur **62** est formé sur la bague intérieure de roulement **36** en regard du chemin de roulement extérieur **24** situé du côté intérieur du véhicule. Les corps roulants **16, 18** forment d'une part une première rangée de corps roulants **16** qui roulent sur le chemin de roulement extérieur **22** et le chemin de roulement intérieur **46** du côté extérieur du véhicule, et d'autre part une deuxième rangée de corps roulants **18** qui roulent sur le chemin de roulement extérieur **24** et le chemin de roulement intérieur **62** du côté intérieur du véhicule.

Ces deux rangées de corps roulants **16, 18** et les chemins de roulement **22, 24, 46, 62** sont protégés par deux dispositifs d'étanchéité, à savoir un dispositif d'étanchéité **64** situé du côté extérieur du véhicule, positionné entre la bague extérieure **20** et le moyeu de roue **34,** et un dispositif d'étanchéité **66** situé du côté intérieur du véhicule, positionné entre la bague extérieure **20** et la bague intérieure de roulement **36.**

Les éléments constitutifs du roulement de roue **10** décrits jusqu'ici sont génériques, et peuvent se présenter sous de multiples variantes. En particulier, on peut envisager que le chemin de roulement intérieur **46** soit formé sur une bague de roulement rapportée sur le moyeu de roue **34.** La bague intérieure **36** du côté intérieur du véhicule peut être fixée au moyeu de roue **34** par une bouterolle et n'avoir le cas échéant aucun contact avec le bol de transmission **38.** La fixation entre le bol de transmission **38** et le moyeu de roue **34** peut être réalisée par tout moyen. Le roulement peut ne comporter qu'une rangée de corps roulants **16,** et ceux-ci peuvent être constitués par des billes ou des rouleaux.

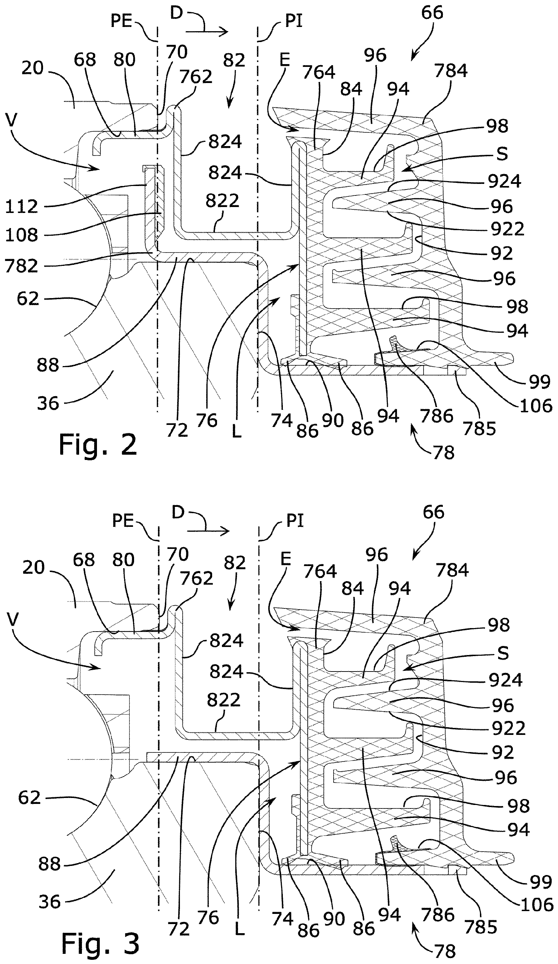

On s'intéressera maintenant plus précisément au dispositif d'étanchéité **66** situé du côté intérieur du véhicule, illustré en détail sur la figure 2, et qui réalise l'étanchéité entre la bague extérieure de roulement **20** et la bague intérieure de roulement **36,** et plus spécifiquement la protection d'un volume **V** situé entre le chemin de roulement **24** de la bague extérieure **20** et le chemin de roulement **62** de la bague intérieure **36.** Dans cette région, la bague extérieure de roulement **20** comporte une portée de frettage **68,** qui est ici cylindrique et tournée vers l'axe de révolution **XX,** et une paroi d'extrémité **70,** qui permet de définir un plan de référence **PE** de la bague extérieure de roulement **20,** perpendiculaire à l'axe de révolution **XX** et tangent à la face d'extrémité **70.** La portée de frettage **68** s'étend, en direction axiale et en direction circonférentielle, dans une zone de la bague extérieure **20** située entre le chemin de roulement **24** situé du côté intérieur du véhicule et la face d'extrémité **70.** La portée de frettage **68** de la bague extérieure est plus éloignée de l'axe de révolution **XX** qu'un cercle primitif **C** de la rangée de corps roulants **18,** et, dans ce mode de réalisation, plus éloignée de l'axe de révolution **XX** qu'un fond de chemin **FE** du chemin de roulement **24** de la bague extérieure **20.**

La bague intérieure de roulement **36** comporte également une portée de frettage **72,** qui est ici cylindrique et tournée radialement vers l'extérieur, et une paroi d'extrémité **74,** qui permet de définir un plan de référence **PI** de la bague intérieure de roulement **36,** perpendiculaire à l'axe de révolution **XX** et tangent à la face d'extrémité **74.** La portée de frettage **72** s'étend, en direction axiale et en direction circonférentielle, dans une zone de la bague intérieure située entre le chemin de roulement **62** situé du côté intérieur du véhicule et la face d'extrémité **74.** La face d'extrémité **74** de la bague intérieure de roulement et la face d'extrémité **70** de la bague extérieure de roulement sont tournées dans une direction commune **D** parallèle à l'axe de référence **XX,** qui sera une direction axiale de référence pour la suite de l'exposé. On constate dans ce mode de réalisation que le plan de référence **PI** de la bague intérieure de roulement **36** est situé à distance du plan de référence **PE** de la bague extérieure de roulement **20** et décalé dans la direction axiale de référence **D,** de sorte que la bague intérieure de roulement **36** est en saillie par rapport à la bague extérieure de roulement **20** dans la direction axiale de référence **D,** et traverse le plan de référence **PE** de la bague extérieure de roulement **20.** Plus spécifiquement, une partie au moins de la portée de frettage **72** de la bague intérieure de roulement **36** est située d'un côté du plan de référence **PE** de la bague extérieure de roulement **20** opposé à la portée de frettage **68** de la bague extérieure de roulement **20.**

Le dispositif d'étanchéité **66** comporte une structure extérieure **76** solidaire de la bague extérieure **20,** et une structure intérieure **78** solidaire de la bague intérieure **36.**

La structure extérieure **76** comporte une portion de frettage **80** frettée sur la portée de frettage **68** de la bague extérieure **20,** et une portion fonctionnelle formant une gouttière **82** ouverte radialement vers l'extérieur, une paroi de chicane **84,** et, dans ce mode de réalisation, deux lèvres de joint **86.** La gouttière **82** comporte un fond **822** et des parois latérales **824,** qui sont situées axialement de part et d'autre du fond et sont plus éloignées de l'axe de révolution que le fond. Dans ce mode de réalisation, la structure extérieure **76** comporte une armature rigide **762,** par exemple en tôle ou en matière plastique, et un surmoulage **764.** L'armature **762** forme la portion de frettage **80** et la gouttière **82,** alors que le surmoulage **764** forme la paroi de chicane **84** et les lèvres de joint **86.**

La structure intérieure **78** comporte une portion de frettage **88** frettée sur la portée de frettage **72** de la bague intérieure **36,** et une portion fonctionnelle formant un siège de joint **90** et une paroi de chicane **92** située en regard de la paroi de chicane **84** de la structure extérieure **76** pour délimiter un passage en chicane **S** entre la structure intérieure **78** et la structure extérieure **76** Les lèvres de joint **86** sont élastiquement déformables et portent sur le siège de joint **90** qui, dans ce mode de réalisation, est cylindrique. La structure intérieure **78** et la structure extérieure **76** du dispositif d'étanchéité délimitent ensemble un logement annulaire **L** pour le siège de joint **90** et les lèvres de joint **86,** logement dans lequel débouche le passage en chicane **S** et en communication avec le volume interne **V** délimité par le chemin de roulement **24** de la bague extérieure de roulement **20** et par le chemin de roulement **62** de la bague intérieure de roulement **36.**

La portion de frettage **88** et la portion fonctionnelle de la structure intérieure **78** se trouvent de part et d'autre du plan de référence **PI** de la bague intérieure **36.** Il est ainsi possible de positionner le siège de joint **90** à une plus proche distance de l'axe de révolution **XX** que la portion de frettage **88.** Cette disposition vise à minimiser le diamètre du siège de joint **90** et permet de minimiser le couple de frottement entre les lèvres de joint **86** et le siège de joint **90,** et de réduire la chaleur produite par ce frottement.

Le passage en chicane **S** présente une entrée **E** délimitée par une portion d'entrée de la paroi de chicane **84** de la structure extérieure **76** et par une portion d'entrée de la paroi de chicane **92** de la structure intérieure **78.** L'entrée **E** du passage en chicane **S** et la portion de frettage **80** de la structure extérieure **76** sont situées axialement de part et d'autre de la gouttière **82.** Le passage en chicane **S** et la gouttière **82** sont situés d'un même premier côté du plan de référence **PE** de la bague extérieure **20** opposé au côté du plan de référence **PE** ou est située la portion de frettage **80** de la structure extérieure **76.** L'entrée du passage en chicane est plus éloignée de l'axe de révolution **XX** que le siège de joint **90.**

La paroi de chicane **84** de la structure extérieure **76** est formée par des nervures annulaires **94** qui font saillie axialement vers la paroi de chicane **92** de la structure intérieure **78.** De façon similaire, la paroi de chicane **92** de la structure intérieure **78** est formée par une ou plusieurs nervures annulaires **96,** qui font saillie axialement vers la paroi de chicane **84** de la structure extérieure **76** et viennent s'interposer dans des espaces intercalaires entre les nervures annulaires **94** de la structure extérieure **76.** Les nervures annulaires **94** de la structure extérieure **76** forment une ou plusieurs gouttières additionnelles **98** situées à l'intérieur du passage en chicane **S.** Au niveau des nervures annulaires **96** de la structure intérieure **78,** la paroi de chicane **92** comporte des facettes tronconiques **922** tournées vers l'axe de révolution et des parois tronconiques **924** tournée radialement vers l'extérieur.

L'entrée **E** du passage en chicane **S** est annulaire et tournée dans une direction axiale opposée à la direction axiale de référence **D,** vers la bague extérieure de roulement **20.** L'entrée **E** est plus éloignée de l'axe de révolution **XX** que le fond **822** de la gouttière **82.** En l'occurrence, l'entrée **E** est de préférence plus éloignée de l'axe de révolution **XX** que le cercle primitif **C** défini par la rangée de corps roulants **18.**

La portion d'entrée de la paroi de chicane **92** de la structure intérieure **78** est de préférence tronconique comme illustré, de manière à converger vers un sommet plus éloigné du plan de référence de la bague extérieure **PE** que l'entrée **E.** De façon similaire, la portion d'entrée de la paroi de chicane **84** de la structure extérieure **76** est de préférence tronconique comme illustré sur les figures, de manière à converger vers un sommet plus éloigné du plan de référence **PE** de la bague extérieure que l'entrée **E.**

On constate dans ce mode de réalisation que la gouttière **82** est située partiellement au moins en recouvrement axial avec la portée de frettage **72** de la bague intérieure de roulement **36** et avec la portion de frettage **88** de la structure intérieure **78.** La paroi de chicane **84** de la structure extérieure **76** est située entièrement d'un côté du plan de référence **PI** de la bague intérieure de roulement **36,** et entièrement d'un côté de la gouttière **82,** de sorte que la gouttière **82** est située axialement entre la portion de frettage **80** de la structure extérieure **76** et la paroi de chicane **84** de la structure extérieure **76.**

Optionnellement, la portion fonctionnelle de la structure intérieure **78** peut également former un siège **99** ou un support pour un joint statique **102** coopérant directement ou indirectement avec portion médiane évasée **52** du bol de transmission **38** et/ou une interface de fixation d'une manche de protection **104** du bol de transmission **38.**

La structure intérieure **78** du dispositif d'étanchéité **66** comporte une armature **782,** de préférence métallique, qui forme la portion de frettage **72** et peut également former le siège de joint **90.** Alternativement, le siège de joint **90** peut être formé sur une pièce annulaire rapportée sur l'armature **782,** cette armature **782** pouvant être réalisée ou non dans un matériau non métallique. De préférence, la structure intérieure **78** comporte en outre une deuxième pièce **784** fixée à une portion de raccordement **785** de l'armature **782** par tout moyen approprié, notamment par collage, surmoulage ou fixation mécanique, par exemple par frettage ou par des éléments de fixation, ou encore, comme illustré sur les figures 1, 2 et 3, par accrochage élastique. La portion de raccordement **785** de l'armature **782** est ici en saillie axiale par rapport au siège de joint **90** dans la direction de référence **D.** La deuxième pièce **784** peut être en plastique. Elle constitue un déflecteur qui forme la paroi de chicane **92** de la structure intérieure et le cas échéant le siège **99** ou le support pour joint statique **102,** voire le joint statique **102** lui-même. Dans le mode de réalisation des figures 1 et 2, une troisième pièce **786** délimite avec la deuxième pièce **784** une gouttière additionnelle **106** à proximité du siège de joint **90.**

Suivant une variante non illustrée, la pièce constituant le déflecteur peut également former le siège de joint.

Dans le mode de réalisation des figures 1 et 2, la structure intérieure **78** sert également de support à un codeur **108,** de préférence annulaire, positionné en regard d'une paroi latérale **824** ou du fond **822** de la gouttière **82,** et qui peut notamment être un codeur magnétique multipolaire ou une roue phonique. On peut ainsi, avec un capteur **110** pénétrant localement dans la gouttière **82,** lire à distance au travers de la paroi **824** de la gouttière **82** une donnée, notamment une donnée de position, codée sur le codeur **108.** La lecture peut être radiale si le codeur **108** est positionné sur la portion de frettage **88** de la structure intérieure **78,** et si le frettage est maîtrisé de manière à ne pas induire de déformation non contrôlée du codeur **108.** Alternativement, et de manière préférentielle, la lecture est axiale, comme illustré sur les figures 1 et 2, le codeur **108** étant alors supporté par une collerette annulaire plane **112** faisant saillie radialement depuis la portion de frettage **88** vers la bague extérieure de roulement **20.** Il est à noter que même en l'absence de codeur **108,** la collerette annulaire plane **112,** positionnée en regard et à faible distance de la paroi latérale **824,** peut être avantageuse, en ce qu'elle permet de confiner la graisse à l'intérieur du volume **V,** permettant le cas échéant d'éliminer l'une des lèvres de joint **86** et contribuant ainsi à une diminution du couple de frottement.

Sur la figure 3 est illustrée une autre variante, qui se distingue du mode de réalisation des figures **1** et **2** par la forme du joint, qui ne présente qu'une lèvre de joint **86.**

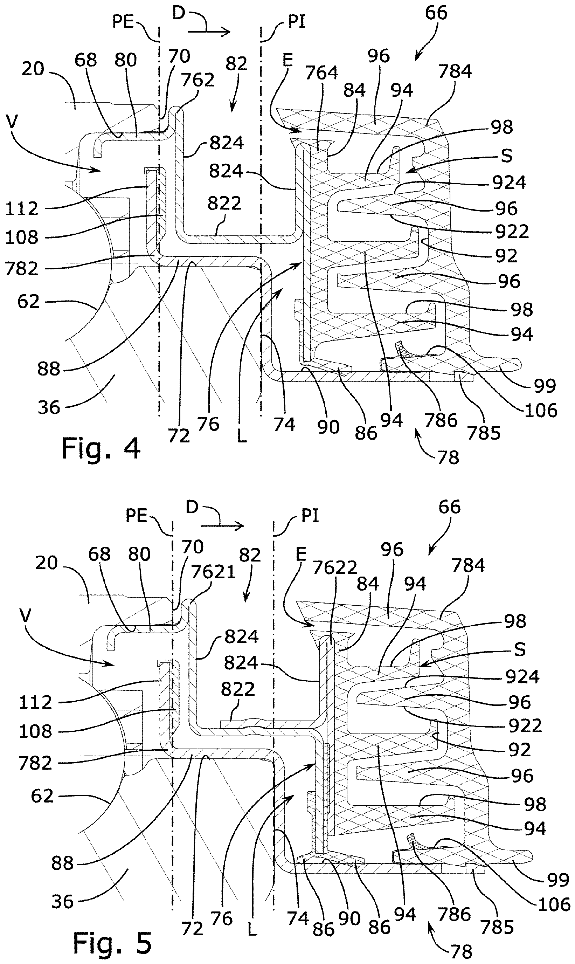

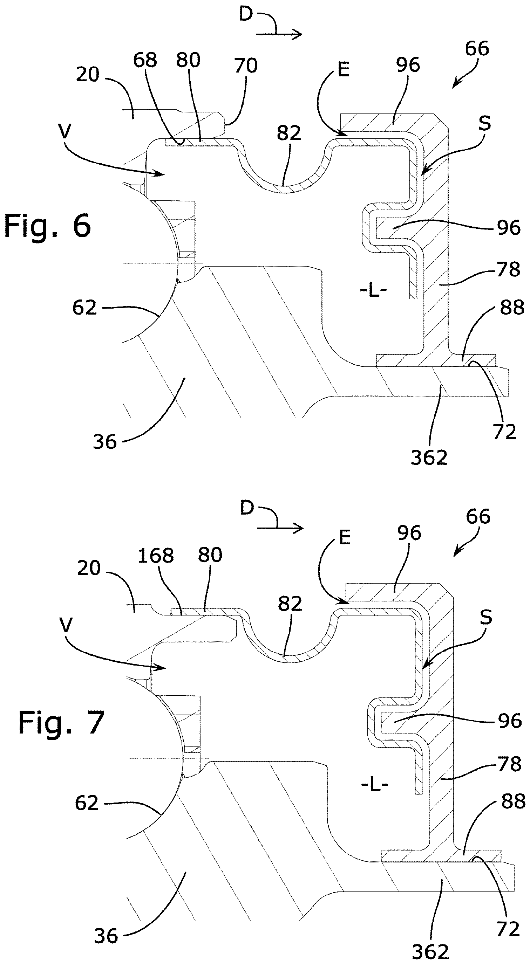

Sur la figure 4 est illustrée une autre variante, qui se distingue du mode de réalisation des figures **1** et **2** par le fait que l'armature **762** de la structure extérieure **76** du dispositif d'étanchéité est constituée par deux pièces **7621, 7622** fixées l'une à l'autre par tout moyen approprié, ici par frettage et accroche mécanique.

Suivant une variante non illustrée, le siège de joint peut comporter une face annulaire plane, parallèle au plan de référence de la bague intérieure, la structure extérieure du dispositif d'étanchéité comportant alors une lèvre de joint venant en appui axial contre cette face plane.

Suivant une variante non illustrée, la portée de frettage **68** de la bague extérieure est plus éloignée de l'axe de révolution **XX** que le cercle primitif **C** de la rangée de corps roulants **18,** et plus proche de l'axe de révolution **XX** qu'un fond de chemin **FE** du chemin de roulement **24** de la bague extérieure **20.**

Les exemples représentés sur les figures et discutés ci-dessus ne sont donnés qu'à titre illustratif. L'invention est limitée par les revendications annexées.

## Revendications

1. Roulement de roue (10) comportant au moins une bague extérieure (20) et au moins une bague intérieure (36), guidées l'une par rapport à l'autre autour d'un axe de révolution (XX) du roulement de roue (10), le roulement de roue (10) comportant en outre un dispositif d'étanchéité (66), le dispositif d'étanchéité comportant au moins une structure extérieure (76) rapportée sur la bague extérieure (20) et une structure intérieure (78) rapportée sur la bague intérieure (36), la structure extérieure (76) et la structure intérieure (78) délimitant ensemble un passage en chicane (S) présentant une entrée (E), la structure extérieure (76) présentant une portion de frettage (80) frettée sur la bague extérieure (20), la structure intérieure (78) présentant une portion de frettage (88) frettée sur une portée de frettage (72) de la bague intérieure (36), la structure extérieure (76) formant une gouttière annulaire (82) ouverte radialement vers l'extérieur, l'entrée (E) du passage en chicane (S) et la portion de frettage (80) de la structure extérieure (76) étant situées axialement de part et d'autre de la gouttière (82), le passage en chicane (S) et la gouttière (82) étant situés d'un même premier côté d'un plan de référence (PE) de la bague extérieure (20), perpendiculaire à l'axe de révolution (XX) et tangent à une paroi d'extrémité (70) de la bague extérieure (20), la portion de frettage (80) de la structure extérieure (76) et la bague extérieure (20) étant situées d'un deuxième côté du plan de référence (PE) de la bague extérieure (20), opposé au premier côté, la gouttière (82) présentant un fond (822) et des parois latérales (824) situées axialement de part et d'autre du fond (822), les parois latérales (824) étant plus éloignées de l'axe de révolution (XX) que le fond (822), **caractérisé en ce que** la structure intérieure (78) comporte une collerette annulaire plane (112) faisant saillie radialement depuis la portion de frettage (88) de la structure intérieure (78) vers la bague extérieure (20), positionnée en regard et à faible distance d'une des parois latérales (824) de la gouttière (82).

2. Roulement de roue (10) selon la revendication 1, **caractérisé en ce que** le passage en chicane (S) est délimité par une paroi de chicane (84) de la structure extérieure (76) et une paroi de chicane (92) de la structure intérieure (78), une ou plusieurs des conditions suivantes étant réalisées :
- la paroi de chicane (84) de la structure extérieure (76) est située axialement entre le plan de référence (PE) de la bague extérieure (20) et la paroi de chicane (92) de la structure intérieure (78) ;
- la gouttière (82) est située axialement entre la portion de frettage (80) de la structure extérieure (76) et la paroi de chicane (84) de la structure extérieure (76) ;
- la paroi de chicane (84) de la structure extérieure (76) forme une ou plusieurs gouttières additionnelles (98) situées à l'intérieur du passage en chicane (S) ;
- la paroi de chicane (92) de la structure intérieure (78) forme une ou plusieurs parois tronconiques (922) tournées vers l'axe de révolution, et convergeant chacune vers un sommet plus éloigné du plan de référence (PE) que l'entrée (E) ; et/ou
- la paroi de chicane (84) de la structure extérieure (76) forme une ou plusieurs nervures annulaires (94) de la structure extérieure (76), et la paroi de chicane (92) de la structure intérieure (78) forme une ou plusieurs nervures annulaires (96) de la structure intérieure (78) qui viennent s'interposer dans des espaces intercalaires entre les nervures annulaires (94) de la structure extérieure (76) ;
- une portion d'entrée de la paroi de chicane (92) de la structure intérieure (78) est tronconique et converge vers un sommet plus éloigné du plan de référence (PE) de la bague extérieure (20) que l'entrée (E).

3. Roulement de roue (10) selon l'une quelconque des revendications précédentes, **caractérisé en ce que** l'entrée (E) est tournée axialement vers la gouttière (82).

4. Roulement de roue (10) selon l'une quelconque des revendications précédentes, **caractérisé en ce que** le fond (822) de la gouttière (82) est plus proche de l'axe de révolution (XX) que l'entrée (E), l'entrée (E) débouchant de préférence sur un pourtour radial extérieur d'une des parois latérales (824) de la gouttière (82).

5. Roulement de roue (10) selon l'une quelconque des revendications précédentes, **caractérisé en ce que** la bague extérieure (20) forme au moins un chemin de roulement (24), la bague intérieure (36) formant au moins un chemin de roulement (62) situé en regard du chemin de roulement (24) de la bague extérieure (20) et délimitant avec le chemin de roulement (24) de la bague extérieure (20) un volume intérieur (V) du roulement de roue (10) ouvert sur un volume d'étanchéité (L) délimité par la structure extérieure (76) du dispositif d'étanchéité (66) et par la structure intérieure (78) du dispositif d'étanchéité (66), le roulement de roue comportant au moins une rangée de corps roulants (18) aptes à rouler sur le chemin de roulement (24) de la bague extérieure (20) et le chemin de roulement (62) de la bague intérieure (36) de manière à permettre un mouvement relatif de rotation entre la bague intérieure (36) et la bague extérieure (20) autour d'un axe de révolution (XX), l'entrée (E) du passage en chicane (S) étant plus éloignée de l'axe de révolution (XX) qu'un cercle primitif (C) défini par la rangée de corps roulants (18).

6. Roulement de roue (10) selon la revendication 5, **caractérisé en ce que** le dispositif d'étanchéité (66) comporte en outre au moins une lèvre de joint (86) élastiquement déformable, la lèvre de joint (86) étant fixée à une première des structures intérieure ou extérieure (78, 76) et venant en contact glissant contre un siège de joint (90) formé par une deuxième des structures intérieure ou extérieure (78, 76), la lèvre de joint (86) et le siège de joint (90) étant situés dans le volume d'étanchéité (L).

7. Roulement de roue (10) selon la revendication 6, **caractérisé en ce qu'**une ou plusieurs des conditions suivantes sont réalisées :
- le siège de joint (90) est plus proche de l'axe de révolution (XX) que l'entrée (E) du passage en chicane (S) ;
- le siège de joint (90) est plus proche de l'axe de révolution (XX) que le cercle primitif (C) défini par la rangée de corps roulants (18) ;
- le siège de joint (90) est plus proche de l'axe de révolution (XX) qu'un fond de chemin (FE) du chemin de roulement (62) de la bague intérieure (36) ;
- le siège de joint (90) est plus proche de l'axe de révolution (XX) que la portion de frettage (88) de la structure intérieure (78) ; et/ou
- la lèvre de joint (86) est située du premier côté du plan de référence (PE) de la bague extérieure (20).

8. Roulement de roue (10) selon l'une quelconque des revendications 5 à 7, **caractérisé en ce que** la portion de frettage (80) de la structure extérieure (76) est frettée sur une portée de frettage (68) de la bague extérieure (20) tournée radialement vers l'axe de révolution (XX) et située axialement entre le chemin de roulement (24) de la bague extérieure (20) et le plan de référence (PE) de la bague extérieure (20).

9. Roulement de roue (10) selon l'une quelconque des revendications précédentes, **caractérisé en ce que** la structure extérieure (76) comporte une armature (762), formant la portion de frettage (80) de la structure extérieure (76).

10. Roulement de roue (10) selon la revendication 9, **caractérisé en ce que** l'armature (762) forme la gouttière (82).

11. Roulement de roue (10) selon l'une quelconque des revendications précédentes, **caractérisé en ce que** la bague intérieure (36) présente une face d'extrémité axiale (74) tournée dans la direction axiale de référence (D), la face d'extrémité axiale (74) de la bague intérieure (36) étant en saillie par rapport à la face d'extrémité axiale (70) de la bague extérieure (20) dans la direction axiale de référence (D).

12. Roulement de roue (10) selon la revendication 11, **caractérisé en ce que** la gouttière (82) est située axialement de part et d'autre d'un plan de référence (PI) de la bague intérieure (36), perpendiculaire à l'axe de révolution (XX) et tangent à la face d'extrémité axiale (74) de la bague intérieure (36).

13. Roulement de roue (10) selon l'une quelconque des revendications précédentes, **caractérisé en ce qu'**une ou plusieurs des conditions suivantes sont réalisées :
- la bague extérieure de roulement (20) présente une interface (28) de fixation à une jambe de suspension (30),
- la bague intérieure de roulement (36) constitue un moyeu de roue ou est pourvue d'une interface de fixation (60) à un moyeu de roue (34),
- la bague intérieure (36) comporte une interface d'appui ou de frettage sur un bol de transmission (38),
- la portion de frettage (80) de la structure extérieure (76) est cylindrique,
- la bague extérieure (20) est monobloc.

## Patentansprüche

1. Radlager (10) mit mindestens einem Außenring (20) und mindestens einem Innenring (36), die relativ zueinander um eine Rotationsachse (XX) des Radlagers (10) geführt werden, wobei das Radlager (10) ferner eine Dichtungsvorrichtung (66) aufweist, die Dichtungsvorrichtung mindestens eine äußere Struktur (76), die am Außenring (20) angebracht ist, und eine innere Struktur (78), die am Innenring (36) angebracht ist, umfasst, wobei die äußere Struktur (76) und die innere Struktur (78) zusammen einen Schikanendurchgang (S) begrenzen, der einen Eingang (E) aufweist, wobei die äußere Struktur (76) einen Schrumpfungsabschnitt (80) aufweist, der auf den Außenring (20) aufgeschrumpft ist, wobei die innere Struktur (78) einen Schrumpfungsabschnitt (88) aufweist, der auf eine Schrumpfauflagefläche (72) des Innenrings (36) aufgeschrumpft ist, die äußere Struktur (76) eine ringförmige Rinne (82) bildet, die radial nach außen offen ist, wobei der Eingang (E) des Schikanendurchgangs (S) und der Schrumpfungsabschnitt (80) der äußeren Struktur (76) axial auf beiden Seiten der Rinne (82) angeordnet sind, wobei der Schikanendurchgang (S) und die Rinne (82) auf einer gleichen ersten Seite einer Bezugsebene (PE) des Außenrings (20) liegen, die senkrecht zur Rotationsachse (XX) und tangential zu einer Endwand (70) des Außenrings (20) verläuft, wobei der Schrumpfungsabschnitt (80) der äußeren Struktur (76) und der Außenring (20) auf einer zweiten Seite der Bezugsebene (PE) des Außenrings (20) liegen, die der ersten Seite gegenüberliegt, die Rinne (82) einen Boden (822) und Seitenwände (824) aufweist, die sich axial auf beiden Seiten des Bodens (822) befinden, wobei die Seitenwände (824) weiter von der Rotationsachse (XX) entfernt sind als der Boden (822), **dadurch gekennzeichnet, dass** die innere Struktur (78) einen ebenen ringförmigen Kragen (112) umfasst, der radial von dem Schrumpfungsabschnitt (88) der inneren Struktur (78) in Richtung des Außenrings (20) vorspringt, der gegenüber und in geringem Abstand von einer der Seitenwände (824) der Rinne (82) positioniert ist.

2. Radlager (10) nach Anspruch 1, **dadurch gekennzeichnet, dass** der Schikanendurchgang (S) durch eine Schikanenwand (84) der äußeren Struktur (76) und eine Schikanenwand (92) der inneren Struktur (78) begrenzt ist, wobei eine oder mehrere der folgenden Bedingungen erfüllt sind:
- die Schikanenwand (84) der äußeren Struktur (76) ist axial zwischen der Bezugsebene (PE) des Außenrings (20) und der Schikanenwand (92) der inneren Struktur (78) angeordnet;
- die Rinne (82) ist axial zwischen dem Schrumpfungsabschnitt (80) der äußeren Struktur (76) und der Schikanenwand (84) der äußeren Struktur (76) angeordnet;
- die Schikanenwand (84) der äußeren Struktur (76) bildet eine oder mehrere zusätzliche Rinnen (98), die sich innerhalb des Schikanendurchgangs (S) befinden;
- die Schikanenwand (92) der inneren Struktur (78) bildet eine oder mehrere kegelstumpfförmige Wände (922), die der Rotationsachse zugewandt sind und jeweils zu einem Scheitelpunkt zusammenlaufen, der weiter von der Bezugsebene (PE) entfernt ist als der Eingang (E); und/oder
- die Schikanenwand (84) der äußeren Struktur (76) bildet eine oder mehrere ringförmige Rippen (94) der äußeren Struktur (76), und die Schikanenwand (92) der inneren Struktur (78) bildet eine oder mehrere ringförmige Rippen (96) der inneren Struktur (78), die in Zwischenräume zwischen den ringförmigen Rippen (94) der äußeren Struktur (76) eingreifen;
- ein Einlassabschnitt der Schikanenwand (92) der inneren Struktur (78) ist kegelstumpfförmig und läuft zu einem Scheitelpunkt zusammen, der weiter von der Bezugsebene (PE) des Außenrings (20) entfernt ist als der Einlass (E).

3. Radlager (10) nach einem der vorhergehenden Ansprüche,
**dadurch gekennzeichnet, dass** der Einlass (E) axial der Rinne (82) zugewandt ist.

4. Radlager (10) nach einem der vorhergehenden Ansprüche,
**dadurch gekennzeichnet, dass** der Boden (822) der Rinne (82) näher an der Rotationsachse (XX) liegt als der Einlass (E), wobei der Einlass (E) vorzugsweise an einem radialen Außenumfang einer der Seitenwände (824) der Rinne (82) mündet.

5. Radlager (10) nach einem der vorhergehenden Ansprüche,
**dadurch gekennzeichnet, dass** der Außenring (20) mindestens eine Laufbahn (24) bildet, der Innenring (36) mindestens eine Laufbahn (62) bildet, die der Laufbahn (24) des Außenrings (20) gegenüberliegt und mit der Laufbahn (24) des Außenrings (20) ein Innenvolumen (V) des Radlagers (10) begrenzt, das zu einem Dichtungsvolumen (L) hin offen ist, das durch die äußere Struktur (76) der Dichtungsvorrichtung (66) und durch die innere Struktur (78) der Dichtungsvorrichtung (66) begrenzt wird, das Radlager mindestens eine Reihe von Rollkörpern (18) umfasst, die geeignet sind, auf der Laufbahn (24) des Außenrings (20) und der Laufbahn (62) des Innenrings (36) zu rollen, um eine relative Drehbewegung zwischen dem Innenring (36) und dem Außenring (20) um eine Rotationsachse (XX) zu ermöglichen, wobei der Eingang (E) des Schikanendurchgangs (S) weiter von der Rotationsachse (XX) entfernt ist als ein Teilkreis (C), der durch die Reihe von Rollkörpern (18) definiert wird.

6. Radlager (10) nach Anspruch 5, **dadurch gekennzeichnet, dass** die Dichtungsvorrichtung (66) ferner mindestens eine elastisch verformbare Dichtungslippe (86) umfasst, wobei die Dichtungslippe (86) an einer ersten der inneren oder äußeren Strukturen (78, 76) befestigt ist und in Gleitkontakt mit einem Dichtungssitz (90) kommt, der durch eine zweite der inneren oder äußeren Strukturen (78, 76) gebildet wird, wobei die Dichtungslippe (86) und der Dichtungssitz (90) innerhalb des Dichtungsvolumens (L) angeordnet sind.

7. Radlager (10) nach einem Anspruch 6, **dadurch gekennzeichnet, dass** eine oder mehrere der folgenden Bedingungen erfüllt sind:
- der Dichtungssitz (90) liegt näher an der Rotationsachse (XX) als der Einlass (E) des Schikanendurchgangs (S);
- der Dichtungssitz (90) liegt näher an der Rotationsachse (XX) als ein Teilkreis (C), der durch die Reihe von Rollkörpern (18) definiert wird;
- der Dichtungssitz (90) liegt näher an der Rotationsachse (XX) als ein Boden (FE) der Laufbahn (62) des Innenrings (36);
- der Dichtungssitz (90) liegt näher an der Rotationsachse (XX) als der Schrumpfungsabschnitt (88) der inneren Struktur (78); und/oder
- die Dichtlippe (86) ist auf der ersten Seite der Bezugsebene (PE) des Außenrings (20) angeordnet.

8. Radlager (10) nach einem der Ansprüche 5 bis 7,
**dadurch gekennzeichnet, dass** der Schrumpfungsabschnitt (80) der äußeren Struktur (76) auf einen Schrumpfsitz (68) des Außenrings (20) aufgeschrumpft ist, der radial zur Rotationsachse (XX) gerichtet ist und axial zwischen der Laufbahn (24) des Außenrings (20) und der Bezugsebene (PE) des Außenrings (20) liegt.

9. Radlager (10) nach einem der vorhergehenden Ansprüche,
**dadurch gekennzeichnet, dass** die innere Struktur (76) ein Gestell (762), das den Schrumpfungsabschnitt (80) und den Dichtungssitz (76) bildet, umfasst.

10. Radlager (10) nach Anspruch 9, **dadurch gekennzeichnet, dass** das Gestell (762) die Rinne (82) bildet.

11. Radlager (10) nach einem der vorhergehenden Ansprüche,
**dadurch gekennzeichnet, dass** der Innenring (36) eine axiale Endfläche (74) aufweist, die in die axiale Bezugsrichtung (D) weist, wobei die axiale Endfläche (74) des Innenrings (36) in der axialen Bezugsrichtung (D) über die axiale Endfläche (70) des Außenrings (20) hinausragt.

12. Radlager (10) nach Anspruch 11, **dadurch gekennzeichnet, dass** die Rinne (82) axial auf beiden Seiten einer Bezugsebene (PI) des Innenrings (36) angeordnet ist, die senkrecht zur Rotationsachse (XX) und tangential zur axialen Endfläche (74) des Innenrings (36) verläuft.

13. Radlager (10) nach einem der vorstehenden Ansprüche,
**dadurch gekennzeichnet, dass** eine oder mehrere der folgenden Bedingungen erfüllt sind:
- der Lageraußenring (20) weist eine Schnittstelle (28) zur Befestigung an einem Federbein (30) auf,
- der innere Lagerring (36) bildet eine Radnabe oder ist mit einer Schnittstelle (60) zur Befestigung an einer Radnabe (34) versehen,
- der Innenring (36) weist eine Schnittstelle zur Auflage oder zum Schrumpfen an einer Übertragungsschüssel (38) auf,
- der Schrumpfungsabschnitt (80) der äußeren Struktur (76) ist zylindrisch,
- der Außenring (20) ist einstückig.

## Claims

1. A wheel bearing (10) comprising at least one outer ring (20) and at least one inner ring (36), which are guided relative to one another about an axis of revolution (XX) of the wheel bearing (10), the wheel bearing (10) further comprising a sealing device (66), the sealing device comprising at least an outer structure (76) attached to the outer ring (20) and an inner structure (78) attached to the inner ring (36), the outer structure (76) and the inner structure (78) together delimiting a chicane passage (S) having an inlet (E), the outer structure (76) having a shrink-fitting portion (80) shrink-fitted onto the outer ring (20), the inner structure (78) having a shrink-fitting portion (88) shrink-fitted onto a shrink-fitting surface (72) of the inner ring (36), the outer structure (76) forming an annular gutter (82) open radially outwards, the inlet (E) of the chicane passage (S) and the shrink-fitting portion (80) of the outer structure (76) being situated axially on either side of the gutter (82), the chicane passage (S) and the gutter (82) being situated on the same first side of a reference plane (PE) of the outer ring (20), perpendicular to the axis of revolution (XX) and tangent to an end wall (70) of the outer ring (20), the shrink-fitting portion (80) of the outer structure (76) and the outer ring (20) being situated on a second side of the reference plane (PE) of the outer ring (20), opposite the first side, the gutter (82) having a bottom (822) and side walls (824) situated axially on either side of the bottom (822), the side walls (824) being further away from the axis of revolution (XX) than the bottom (822), **characterized in that** the inner structure (78) comprises a flat annular flange (112) projecting radially from the shrink-fitting portion (88) of the inner structure (78) towards the outer ring (20), which flange is positioned opposite and at a short distance from one of the side walls (824) of the gutter (82).

2. The wheel bearing (10) according to claim 1, **characterized in that** the chicane passage (S) is delimited by a chicane wall (84) of the outer structure (76) and a chicane wall (92) of the inner structure (78), with one or more of the following conditions being fulfilled:
- the chicane wall (84) of the outer structure (76) is situated axially between the reference plane (PE) of the outer ring (20) and the chicane wall (92) of the inner structure (78);
- the gutter (82) is situated axially between the shrink-fitting portion (80) of the outer structure (76) and the chicane wall (84) of the outer structure (76);
- the chicane wall (84) of the outer structure (76) forms one or more additional gutters (98) situated inside the chicane passage (S);
- the chicane wall (92) of the inner structure (78) forms one or more frustoconical walls (922) facing the axis of revolution, and each converging towards an apex further from the reference plane (PE) than the inlet (E); and/or
- the chicane wall (84) of the outer structure (76) forms one or more annular ribs (94) of the outer structure (76), and the chicane wall (92) of the inner structure (78) forms one or more annular ribs (96) of the inner structure (78) which are interposed in interspaces between the annular ribs (94) of the outer structure (76);
- an inlet portion of the chicane wall (92) of the inner structure (78) is frustoconical and converges towards an apex further from the reference plane (PE) of the outer ring (20) than the inlet (E).

3. The wheel bearing (10) according to either of the preceding claims, **characterized in that** the inlet (E) faces axially towards the gutter (82).

4. The wheel bearing (10) according to any one of the preceding claims, **characterized in that** the bottom (822) of the gutter (82) is closer to the axis of revolution (XX) than the inlet (E), the inlet (E) preferably opening onto a radially outer periphery of one of the side walls (824) of the gutter (82).

5. The wheel bearing (10) according to any one of the preceding claims, **characterized in that** the outer ring (20) forms at least one raceway (24), the inner ring (36) forming at least one raceway (62) situated opposite the raceway (24) of the outer ring (20) and delimiting with the raceway (24) of the outer ring (20) an inner volume (V) of the wheel bearing (10) open onto a sealing volume (L) delimited by the outer structure (76) of the sealing device (66) and by the inner structure (78) of the sealing device (66), the wheel bearing comprising at least one row of rolling bodies (18) able to roll on the raceway (24) of the outer ring (20) and the raceway (62) of the inner ring (36) so as to allow a relative rotational movement between the inner ring (36) and the outer ring (20) about an axis of revolution (XX), the inlet (E) of the chicane passage (S) being further from the axis of revolution (XX) than a pitch circle (C) defined by the row of rolling elements (18).

6. The wheel bearing (10) according to claim 5, **characterized in that** the sealing device (66) further comprises at least one resiliently deformable seal lip (86), the seal lip (86) being attached to a first of the inner or outer structures (78, 76) and coming into sliding contact against a seal seat (90) formed by a second of the inner or outer structures (78, 76), the seal lip (86) and the seal seat (90) being situated in the sealing volume (L).

7. The wheel bearing (10) according to claim 6, **characterized in that** one or more of the following conditions are fulfilled:
- the seal seat (90) is closer to the axis of revolution (XX) than the inlet (E) of the chicane passage (S);
- the seal seat (90) is closer to the axis of revolution (XX) than the pitch circle (C) defined by the row of rolling bodies (18);
- the seal seat (90) is closer to the axis of revolution (XX) than a raceway bottom (FE) of the raceway (62) of the inner ring (36);
- the seal seat (90) is closer to the axis of revolution (XX) than the shrink-fitting portion (88) of the inner structure (78); and/or
- the seal lip (86) is situated on the first side of the reference plane (PE) of the outer ring (20).

8. The wheel bearing (10) according to any one of claims 5 to 7, **characterized in that** the shrink-fitting portion (80) of the outer structure (76) is shrink-fitted onto a shrink-fitting surface (68) of the outer ring (20) facing radially towards the axis of revolution (XX) and situated axially between the raceway (24) of the outer ring (20) and the reference plane (PE) of the outer ring (20).

9. The wheel bearing (10) according to any one of the preceding claims, **characterized in that** the outer structure (76) comprises a frame (762), forming the shrink-fitting portion (80) of the outer structure (76).

10. The wheel bearing (10) according to claim 9, **characterized in that** the frame (762) forms the gutter (82).

11. The wheel bearing (10) according to any one of the preceding claims, **characterized in that** the inner ring (36) has an axial end face (74) facing in the axial reference direction (D), the axial end face (74) of the inner ring (36) projecting relative to the axial end face (70) of the outer ring (20) in the axial reference direction (D).

12. The wheel bearing (10) according to claim 11, **characterized in that** the gutter (82) is situated axially on either side of a reference plane (PI) of the inner ring (36), perpendicular to the axis of revolution (XX) and tangent to the axial end face (74) of the inner ring (36).

13. The wheel bearing (10) according to any one of the preceding claims, **characterized in that** one or more of the following conditions are fulfilled:
- the outer bearing ring (20) has an interface (28) for attachment to a suspension strut (30),
- the inner bearing ring (36) forms a wheel hub or is provided with an interface (60) for attachment to a wheel hub (34),
- the inner ring (36) has an interface for bearing or shrink-fitting on a torque converter (38),
- the shrink-fitting portion (80) of the outer structure (76) is cylindrical,
- the outer ring (20) is single-piece.
